# EUROPÄISCHE PATENTSCHRIFT

(11) **EP 2 795 595 B1**
(45) Veröffentlichungstag und Bekanntmachung des Hinweises auf die Patenterteilung: **16.03.2016**
(21) Anmeldenummer: 12812858.4
(22) Anmeldetag: 19.12.2012
(51) Int. Cl.: H04L 12/24, G07D 11/00, G07F 19/00

(54) **SYSTEM UND VERFAHREN ZUM BEARBEITEN VON BANKNOTEN**
SYSTEM AND METHOD FOR HANDLING BANKNOTES
SYSTÈME ET PROCÉDÉ DE TRAITEMENT DE BILLETS DE BANQUE

(30) Priorität: 23.12.2011 DE 102011122247
(43) Veröffentlichungstag der Anmeldung: 29.10.2014
(73) Patentinhaber: Giesecke & Devrient GmbH, 81677 München (DE)
(72) Erfinder: DIETZ, Jürgen, 81541 München (DE); KNOPF, Holger, 82131 Stockdorf (DE)
(86) Internationale Anmeldenummer: PCT/EP2012/005278
(87) Internationale Veröffentlichungsnummer: WO 2013/091861

(56) Entgegenhaltungen:
- DE-A1- 10 360 861
- US-A1- 2009 212 105
- US-B1- 6 672 505

## Beschreibung

Die vorliegende Erfindung betrifft ein System sowie ein Verfahren zum Bearbeiten von Wertdokumenten, insbesondere Banknoten. Unter dem Begriff "Bearbeiten" von Wertdokumenten bzw. Banknoten wird hier insbesondere das Zählen, das Prüfen und das Sortieren von Wertdokumenten bzw. Banknoten verstanden.

Die vorliegende Erfindung ist prinzipiell uneingeschränkt für jede Art von blattgutartigen Wertdokumenten verwendbar. Ein besonderer Fokus der vorliegenden Erfindung liegt jedoch auf Banknoten, so dass im Nachfolgenden der Einfachheit halber anstatt des allgemeinen Begriffs "Wertdokumente" in der Regel der Begriff "Banknoten" verwendet wird, ohne dass dies in einschränkender Weise zu verstehen ist.

Bei der Bearbeitung von Banknoten kommen Banknotenbearbeitungsmaschinen zum Einsatz, die üblicherweise aus mehreren Abschnitten oder Bearbeitungszonen bestehen, die nacheinander angeordnet sind und unterschiedliche Arbeitsschritte ausführen. Die Anzahl, Art und Anordnung der Abschnitte kann abhängig von den Anforderungen an die Bearbeitung der Banknoten variieren. Typischerweise umfasst eine Banknotenbearbeitungsmaschine wenigstens einen Eingabeabschnitt mit einem Eingabefach, einen Bedienabschnitt sowie einen Ausgabeabschnitt mit mehreren Ausgabefächern. Nach der Eingabe in das Eingabefach werden die Banknoten im Eingabeabschnitt vereinzelt und in einer Prüfeinrichtung von Sensoren erfasst, um solche Banknoten zu erkennen, die nicht mehr dazu geeignet sind, am Banknotenumlauf teilzunehmen. Diese werden von den umlauffähigen Banknoten getrennt und gesondert ausgegeben oder gegebenenfalls vernichtet. Die umlauffähigen Banknoten werden mittels eines Transportsystems der Banknotenbearbeitungsmaschine weiter transportiert und in den Ausgabefächern des Ausgabeabschnitts beispielsweise je nach dem Wert einer Banknote sortiert ausgegeben. Optional kann eine solche Banknotenbearbeitungsmaschine über ein Schreddermodul zum Vernichten ausgewählter Banknoten und/ oder Module zum Stapeln oder Bündeln von bearbeiteten Banknoten verfügen. Der Ablauf der Banknotenbearbeitung kann von der Bedienperson über eine Benutzerschnittstelle, die sich üblicherweise in dem Bedienabschnitt der Banknotenbearbeitungsmaschine befindet und beispielsweise als Touchscreen ausgestaltet sein kann, gesteuert und überwacht werden.

Insbesondere beim Einsatz von Banknotenbearbeitungsmaschinen bei Zentralbanken oder Großbanken tritt häufig der Fall auf, dass mehrere, teilweise identische Banknotenbearbeitungsmaschinen an unterschiedlichen Standorten betrieben werden, die räumlich weit auseinander liegen können. Hier besteht oftmals der Wunsch, an allen diesen Banknotenbearbeitungsmaschinen (oder zumindest an einem Teil davon) an den verschiedenen Standorten einheitliche Konfigurationsdaten zum Betrieb der Banknotenbearbeitungsmaschinen vorzuhalten. Der Begriff "Konfigurationsdaten" wird hier als Oberbegriff für alle Arten von Daten verstanden, die den Betrieb einer Banknotenbearbeitungsmaschine betreffen, z.B. Betriebsdaten, die die Betriebsparameter (wie z.B. die Bearbeitungsgeschwindigkeit) einer Banknotenbearbeitungsmaschine definieren, Klassifizierungsdaten, die Parameter zur Klassifizierung von Banknoten definieren, Sicherheitseinstellungsdaten, die die Sicherheitseinstellungen (wie z.B. die Passwortlänge) einer Banknotenbearbeitungsmaschine definieren, und dergleichen.

Die DE 103 60 861 A1 zeigt eine Banknotenbearbeitungsmaschine, welche über ein Netzwerk an eine Zentraleverbunden ist.

Vor diesem Hintergrund stellt sich der vorliegenden Erfindung die Aufgabe, ein System und ein Verfahren bereitzustellen, die es erlauben, einer Vielzahl von Banknotenbearbeitungsmaschinen an unterschiedlichen Standorten Konfigurationsdaten zum Betrieb einer jeweiligen Banknotenbearbeitungsmaschine ausfallsicher und automatisch bereitzustellen, um damit die Banknotenbearbeitungsmaschinen zu synchronisieren und einen einheitlichen Betrieb der Vielzahl von Banknotenbearbeitungsmaschinen sicherstellen zu können.

Diese Aufgabe wird erfindungsgemäß durch den Gegenstand von Anspruch 1 gelöst. Ein entsprechendes Verfahren zum Bearbeiten von Banknoten ist Gegenstand des unabhängigen Verfahrensanspruchs. Vorteilhafte Weiterbildungen der Erfindung sind in den Unteransprüchen definiert.

Gemäß einem ersten Aspekt der Erfindung wird ein System gemäß Anspruch 1 und ein Verfahren gemäß Anspruch 10 bereitgestellt.

In den unter der Wurzel, d.h. dem zentralen Master-Zugangsdienstmodul, liegenden Ebenen der Hierarchie von Zugangsdienstmodulen in Form einer Baumstruktur können sowohl das erste und das zweite lokale Zugangsdienstmodul sowie weitere lokale Zugangsdienstmodule als auch Banknotenbearbeitungsmaschinen angeordnet sein und somit dem zentralen Master-Zugangsdienstmodul logisch zugeordnet sein. An den jeweiligen Blättern der Hierarchie von Zugangsdienstmodulen in Form einer Baumstruktur ist vorzugsweise jeweils eine Banknotenbearbeitungsmaschine angeordnet, die einem lokalen Zugangsdienstmodul (oder ggf. dem zentralen Master-Zugangsdienstmodul) einer höheren Ebene der Hierarchie von Zugangsdienstmodulen zugeordnet ist. Die lokalen Zugangsdienstmodule einer niedrigeren Ebene sind den lokalen Zugangsdienstmodulen der nächst höheren Ebene logisch zugeordnet.

Die "Verteilung" von einheitlichen Konfigurationsdaten beginnt somit vorzugsweise beim zentralen Master-Zugangsdienstmodul, das sicherstellt, dass die Konfigurationsdaten zunächst an die dem zentralen Master-Zugangsdienstmodul logisch zugeordneten lokalen Zugangsdienstmodule und Banknotenbearbeitungsmaschinen ausfallsicher weitergeleitet werden, um von dort an Banknotenbearbeitungsmaschinen und/oder weitere lokale Zugangsdienstmodule einer tiefer liegenden Ebene weitergeleitet zu werden. Auf diese Weise werden die Konfigurationsdaten entlang der durch die Zugangsdienstmodule definierten logischen Hierarchie "abwärts" propagiert.

Die lokalen Zugangsdienstmodule sind vorzugsweise als Software ausgestaltet, die auf einem jeweiligen lokalen Server hinterlegt ist und ausgeführt wird. Vorzugsweise ist ein lokaler Server, auf dem ein lokales Zugangsdienstmodul hinterlegt ist, zusammen mit der wenigstens einen Banknotenbearbeitungsmaschine, die diesem lokalen Zugangsdienstmodul logisch zugeordnet ist, Teil eines lokalen Netzwerkes. Alternativ oder zusätzlich kann ein lokales Zugangsdienstmodul als Software ausgestaltet sein, die auf einer der Vielzahl von Banknotenbearbeitungsmaschinen hinterlegt ist und ausgeführt wird. Gemäß einer noch weiteren Alternative kann ein Zugangsdienstmodul im Wesentlichen als Hardware z.B. in Form eines Zugangsdienst-Gateways ausgestaltet sein.

Vorzugsweise ist das zentrale Master-Zugangsdienstmodul als Software auf einem zentralen Server hinterlegt und wird dort ausgeführt. Alternativ kann auch das zentrale Master-Zugangsdienstmodul auf einer der Vielzahl von Banknotenbearbeitungsmaschinen implementiert sein.

Gemäß einer alternativen Ausführungsform ist es denkbar, dass das zentrale Master-Zugangsdienstmodul dazu eingerichtet ist, die geänderten Konfigurationsdaten nur an ausgewählte lokale Zugangsdienstmodule und/ oder ausgewählte Banknotenbearbeitungsmaschinen zu verteilen. Eine entsprechende Filterfunktion kann zusätzlich oder alternativ auch auf den lokalen Zugangsdienstmodulen implementiert sein.

Gemäß einer bevorzugten Ausführungsform ist das zentrale Master-Zugangsdienstmodul dazu ausgestaltet, die geänderten Konfigurationsdaten derart mit Aktivierungszeitpunkten und/ oder Deaktivierungszeitpunkten zu versehen, dass eine Banknotenbearbeitungsmaschine nur innerhalb eines durch einen Aktivierungszeitpunkt und/oder einen Deaktivierungszeitpunkt definierten Gültigkeitzeitraums mit den geänderten Konfigurationsdaten betrieben werden kann. Hierdurch lässt sich durch das zentrale Master-Zugangsdienstmodul beispielsweise ein für alle Banknotenbearbeitungsmaschinen einheitlicher Zeitpunkt definieren, ab dem geänderte Konfigurationsdaten zum Betrieb verwendet werden können.

Gemäß einer bevorzugten Ausführungsform sind Verbindungsdaten zum Aufbau einer Verbindung mit dem lokalen Zugangsdienstmodul, dem eine Banknotenbearbeitungsmaschine zugeordnet ist, z.B. die IP-Adresse dieses lokalen Zugangsdienstmoduls, in der Banknotenbearbeitungsmaschine hinterlegt. In diesem Fall erfolgt die logische Zuordnung einer Banknotenbearbeitungsmaschine zu einem lokalen Zugangsdienstmodul aufgrund der in der Banknotenbearbeitungsmaschine hinterlegten Verbindungsdaten. Alternativ kann eine Banknotenbearbeitungsmaschine dazu ausgestaltet sein, ein lokales Zugangsdienstmodul selbständig zu suchen, z.B. in dem LAN, in das die Banknotenbearbeitungsmaschine integriert ist.

Vorzugsweise ist eine jeweilige Banknotenbearbeitungsmaschine dazu ausgestaltet, sich beim Start der Banknotenbearbeitungsmaschine automatisch bei dem lokalen Zugangsdienstmodul anzumelden, dem die Banknotenbearbeitungsmaschine logisch zugeordnet ist, und sich beim Abschalten der Banknotenbearbeitungsmaschine bei diesem lokalen Zugangsdienstmodul wieder abzumelden. Da die in einer Banknotenbearbeitungsmaschine hinterlegten Verbindungsdaten ferner z.B. die IP-Adresse der Banknotenbearbeitungsmaschine enthalten können, kann das Anmelden beim Start einer Banknotenbearbeitungsmaschine vorzugsweise dadurch erfolgen, dass die Banknotenbearbeitungsmaschine die dort hinterlegten Verbindungsdaten, inklusive der IP-Adresse der Banknotenbearbeitungsmaschine, an das lokale Zugangsdienstmodul sendet, dem diese Banknotenbearbeitungsmaschine logisch zugeordnet ist.

Dabei ist ein jeweiliges lokales Zugangsdienstmodul vorzugsweise dazu ausgestaltet, die Verbindungsdaten, die ein solches lokales Zugangsdienstmodul von den Banknotenbearbeitungsmaschinen und/ oder den lokalen Zugangsdienstmodulen einer tiefer liegenden Ebene erhält, die diesem lokalen Zugangsdienstmodul logisch zugeordnet sind, derart an das lokale Zugangsdienstmodul einer höher liegenden Ebene weiterzuleiten, dem dieses lokale Zugangsdienstmodul logisch zugeordnet ist, dass die Verbindungsdaten entlang der Hierarchie von lokalen Zugangsdienstmodulen zum zentralen Master-Zugangsdienstmodul aufwärts propagiert werden. Diese bevorzugte Ausgestaltung ermöglicht es, von einem lokalen Zugangsdienstmodul aus direkt (d.h. ohne Umwege über lokale Zugangsdienstmodule tieferer Ebenen) auf alle lokalen Banknotenbearbeitungsmaschinen und alle Banknotenbearbeitungsmaschinen der untergeordneten lokalen Zugangsdienstmodule zuzugreifen. Ferner erlaubt diese bevorzugte Ausgestaltung, dass das zentrale Master-Zugangsdienstmodul, eine Verbindung zu allen Banknotenbearbeitungsmaschinen des gesamten Systems herstellen kann. Diese bevorzugte Ausgestaltung ist insbesondere bei der Echtzeit-Überwachung der Banknotenbearbeitungsmaschinen oder beim Abfragen von Statusberichten der Banknotenbearbeitungsmaschinen vorteilhaft.

Gemäß einer bevorzugten Ausführungsform ist eine Banknotenbearbeitungsmaschine dazu ausgestaltet, im Betrieb, nachdem sich die Banknotenbearbeitungsmaschine bei dem lokalen Zugangsdienstmodul angemeldet hat, dem die Banknotenbearbeitungsmaschine logisch zugeordnet ist, ein Aktivsignal, vorzugsweise in regelmäßigen zeitlichen Abständen, an dieses lokale Zugangsdienstmodul zu senden, um diesem lokalen Zugangsdienstmodul anzuzeigen, dass die betreffende Banknotenbearbeitungsmaschine im Betrieb bzw. online ist. Bei dieser bevorzugten Ausführungsform wird vom lokalen Zugangsdienstmodul vorzugsweise eine Liste gepflegt, in der die Banknotenbearbeitungsmaschinen, die dem lokalen Zugangsdienstmodul logisch zugeordnet sind, aufgeführt sind, inklusive deren Verbindungsdaten, z.B. die IP-Adressen der Banknotenbearbeitungsmaschinen, sowie deren Betriebszustände, z.B. online oder offline.

Ein lokales Zugangsdienstmodul ist jeweils vorzugsweise derart ausgestaltet, dass dann, wenn eine der diesem lokalen Zugangsdienstmodul zugeordneten Banknotenbearbeitungsmaschinen nicht online ist, das lokale Zugangsdienstmodul Änderungen der Konfigurationsdaten an diese Banknotenbearbeitungsmaschine erst weiterleitet, sobald diese wieder online ist.

Vorzugsweise ist ein lokales Zugangsdienstmodul derart ausgestaltet, dass dann, wenn sich die Verbindungsdaten einer Banknotenbearbeitungsmaschine, z.B. deren IP-Adresse oder deren Portnummer, ändern, diese automatisch in dem lokalen Zugangsdienstmodul aktualisiert werden, dem diese Banknotenbearbeitungsmaschine zugeordnet ist. Vorteilhafterweise erlaubt diese bevorzugte Ausgestaltung die Verwendung von DHCP (dynamic host configuration protocol).

Vorzugsweise enthalten die Konfigurationsdaten, die in dem zentralen Master-Zugangsdienstmodul, den lokalen Zugangsdienstmodulen und den Banknotenbearbeitungsmaschinen hinterlegt sind, ferner Sicherheitseinstellungsdaten, die die Sicherheitseinstellungen einer jeweiligen Banknotenbearbeitungsmaschine betreffen, wie beispielsweise die minimale Länge von Benutzerpasswörtern, die Länge der Passwort-Historie oder die Anzahl von Login-Fehlversuchen bis ein Benutzerkonto gesperrt wird. Gemäß einer bevorzugten Ausführungsform enthalten die Sicherheitseinstellungsdaten lokale Sicherheitseinstellungsdaten und globale Sicherheitseinstellungsdaten. Dabei sind das zentrale Master-Zugangsdienstmodul und die lokalen Zugangsdienstmodule derart ausgestaltet, dass die lokalen Sicherheitseinstellungsdaten nur an die Banknotenbearbeitungsmaschinen verteilt werden, die direkt oder indirekt (d.h. über ein oder mehrere weitere lokale Zugangsdienstmodule tiefer liegender Ebenen) einem bestimmten lokalen Zugangsdienstmodul logisch zugeordnet sind, für das diese lokalen Sicherheitseinstellungen gelten sollen, und die globalen Sicherheitseinstellungen an alle Banknotenbearbeitungsmaschinen verteilt werden. Erfindungsgemäß ist eine derartige Unterscheidung zwischen lokalen und globalen Daten auch für die hier beschriebenen anderen Arten von Daten, z.B. die Konfigurationsdaten, denkbar.

Vorzugsweise umfasst wenigstens eine der Vielzahl von Banknotenbearbeitungsmaschinen eine Prüfeinrichtung, mit der Messdaten von mit der Banknotenbearbeitungsmaschine bearbeiteten Banknoten erfasst werden. Das lokale Zugangsdienstmodul, dem diese Banknotenbearbeitungsmaschine zugeordnet ist, ist dazu ausgestaltet, die an der Banknotenbearbeitungsmaschine anfallenden Messdaten, an das zentrale Master-Zugangsdienstmodul weiterzuleiten, auf das die anderen lokalen Zugangsdienstmodule zugreifen können, und um dort ggf. analysiert zu werden. Dies ermöglicht beispielsweise, dass die Messdaten und ggf. Analysedaten von Banknotenbearbeitungsmaschinen auch von räumlich entfernten Standorten aus abrufbar sind, z.B. mittels einer weiteren Banknotenbearbeitungsmaschine oder einem gesonderten Client-Rechner, auf dem eine geeignete Auswerte-/ Analyse-Software installiert ist.

Vorzugsweise interagiert das zentrale Master-Zugangsdienstmodul mit einer Seriennummernverwaltungsanwendung, die dazu ausgestaltet ist, ein zentrales Seriennummernarchiv zu pflegen. Dabei fließen in die Seriennummernverwaltungsanwendung Seriennummern ein, die aus den Messdaten extrahiert werden, die jeweils von der Prüfeinrichtung einer Banknotenbearbeitungsmaschine bereitgestellt werden. Vorzugsweise erfolgt diese Extraktion der Seriennummern lokal auf den Banknotenbearbeitungsmaschinen.

Gemäß einer bevorzugten Ausführungsform der Erfindung interagiert das zentrale Master-Zugangsdienstmodul mit einer Wartungsanwendung, die dazu ausgestaltet, auf der Grundlage von Betriebsdaten der Banknotenbearbeitungsmaschine, die dem zentralen Master-Zugangsdienstmodul über die logische Hierarchie von Zugangsdienstmodulen zur Verfügung gestellt werden, den Wartungsbedarf einer jeweiligen Banknotenbearbeitungsmaschine zu bestimmen und ggf. die Wartung einer Banknotenbearbeitungsmaschine zu veranlassen.

Obgleich die vorstehend beschriebenen Anwendungen vorzugsweise zusammen mit dem zentralen Master-Zugangsdienstmodul auf dem zentralen Server implementiert sind, ist es gemäß der vorliegenden Erfindung ebenfalls denkbar, dass eine dieser Anwendungen auch auf einem lokalen Server oder einer Banknotenbearbeitungsmaschine implementiert sein kann, um von dort auf Daten zuzugreifen, z.B. die von den Banknotenbearbeitungsmaschinen bereitgestellten Messdaten, die auf dem zentralen Server hinterlegt sind.

Der Fachmann wird erkennen, dass die vorstehend beschriebenen bevorzugten Ausgestaltungen sich sowohl im Rahmen des ersten Aspekts der Erfindung, d.h. im Rahmen eines Systems zum Bearbeiten von Wertdokumenten, als auch im Rahmen des zweiten Aspekts der Erfindung, d.h. im Rahmen eines Verfahrens zum Bearbeiten von Wertdokumenten, vorteilhaft implementieren lassen.

Weitere Merkmale, Vorteile und Aufgaben der Erfindung gehen aus der folgenden detaillierten Beschreibung mehrerer Ausführungsbeispiele und Ausführungsalternativen hervor. Es wird auf die Zeichnungen verwiesen, in denen zeigen:
- Fig. 1: eine schematische Darstellung einer bevorzugten Ausführungsform eines Systems zur Bearbeitung von Banknoten,
- Fig. 2: eine schematische Detailansicht einer Banknotenbearbeitungsmaschine des Systems zur Bearbeitung von Banknoten von Figur 1, und
- Fig. 3: eine schematische Darstellung der logischen Zuordnung der Banknotenbearbeitungsmaschinen des Systems von Figur 1 zu jeweiligen in dem System implementierten Zugangsdienstmodulen gemäß einer bevorzugten Ausführungsform der Erfindung.

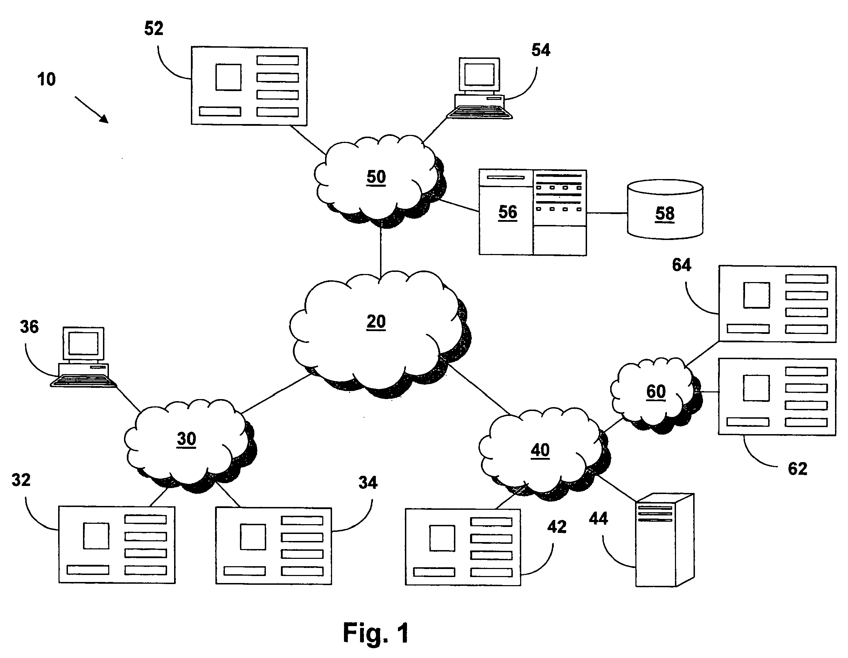

Figur 1 zeigt eine schematische Darstellung eines Systems 10 zur Bearbeitung von Banknoten gemäß einer bevorzugten Ausführungsform der Erfindung. Das System 10 umfasst mehrere Banknotenbearbeitungsmaschinen, nämlich die Banknotenbearbeitungsmaschinen 32, 34, 42, 52, 62 und 64, die jeweils in ein lokales Netzwerk (local area network; LAN) eingebunden sind, und zwar die LANs 30, 40, 50 und 60. Das LAN 30 besteht beispielhaft aus den zwei Banknotenbearbeitungsmaschinen 32 und 34 und einem Client-Rechner 36. Das LAN 40 besteht beispielhaft aus der Banknotenbearbeitungsmaschine 42 und einen lokalen Server 44. Das LAN 50 umfasst beispielhaft neben der Banknotenbearbeitungsmaschine 52 und einem Client-Rechner 54 einen zentralen Server 56, der zur Aufbewahrung großer Datenmengen mit einer Datenbank 58 verbunden sein kann. Bei dem LAN 60, das beispielhaft die Banknotenbearbeitungsmaschinen 62 und 64 umfasst, handelt es sich beispielhaft um ein Subnetzwerk des LAN 40.

Bei der in Figur 1 dargestellten bevorzugten Ausführungsform sind die LANs 30, 40,50 und 60 über ein Kommunikationsnetz 20 derart miteinander verbunden, dass deren Komponenten unter einander kommunizieren können. Bei dem Kommunikationsnetz 20 kann es sich beispielsweise um ein öffentliches Weitverkehrsnetz (insbesondere das Internet) oder ein nichtöffentliches Weitverkehrsnetz (z.B. das nicht-öffentliche Netzwerk einer Großbank) handeln.

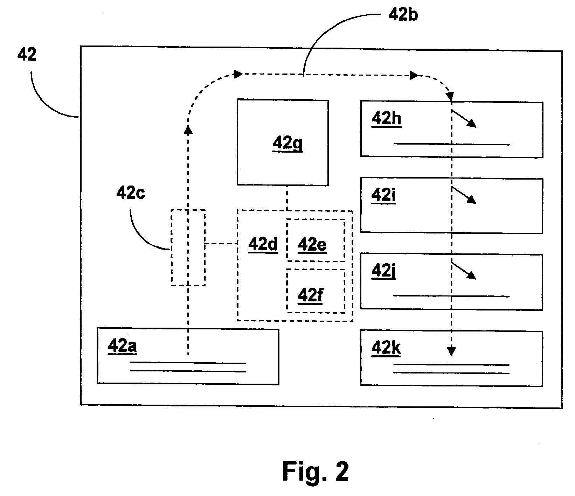

Figur 2 zeigt eine Detailansicht der beispielhaften Banknotenbearbeitungsmaschine 42, die baugleich zu den anderen in Figur 1 dargestellten Banknotenbearbeitungsmaschinen 32, 34, 52, 62 und 64 sein kann, jedoch nicht sein muss. Üblicherweise werden die Banknotenbearbeitungsmaschinen 32,34, 52, 62 und 64 jedoch ähnliche Komponenten wie die Banknotenbearbeitungsmaschine 42 aufweisen, insbesondere einen Eingabeabschnitt, eine Prüfeinrichtung, eine Steuereinrichtung und einen Ausgabeabschnitt.

An der Front- bzw. Vorderseite weist die Banknotenbearbeitungsmaschine 42 ein Eingabefach 42a auf, in das ein Stapel von Banknoten zur Bearbeitung durch die Banknotenbearbeitungsmaschine 42 eingelegt werden kann, wie dies in Figur 2 schematisch angedeutet ist. Bei der in Figur 2 dargestellten bevorzugten Ausführungsform werden die Banknoten mit ihrer langen Seite bzw. Längsseite einer vor der Banknotenbearbeitungsmaschine 42 sitzenden bzw. stehenden Bedienperson zugewandt in das Eingabefach 42a eingelegt. Aus dem Eingabefach 42a werden die Banknoten mittels einer geeigneten Vereinzelungseinrichtung (nicht dargestellt) vereinzelt und einem ersten Abschnitt eines sich anschließenden Transportsystems 42b der Banknotenbearbeitungsmaschine 42 überführt, das die vereinzelten Banknoten zunächst einer Prüfeinrichtung 42c zuführt. Wie dies dem Fachmann bekannt ist, kann das Transportsystem 42b der Banknotenbearbeitungsmaschine 42 beispielsweise mittels einer Vielzahl von Führungs- bzw. Umlenkelementen und durch Riemen angetriebene Antriebsrollen verwirklicht sein. Mittels der Prüfeinrichtung 42c können wählbare Kriterien einer durch die Prüfeinrichtung 42c hindurch bewegten Banknote überprüft werden. Abhängig von dieser Prüfung werden die Banknoten im weiteren Verlauf des Transportsystems 42c der Banknotenbearbeitungsmaschine 42 vorzugsweise durch die geeignete Ansteuerung einer Vielzahl von Weicheneinrichtungen einem der Ausgabefächer 42h-k zugeführt. An der Front- bzw. Vorderseite der Banknotenbearbeitungsmaschine 42 ist ferner ein Touch-Screen 42g vorgesehen, auf dem Informationen über den Betriebszustand der Banknotenbearbeitungsmaschine 42 angezeigt werden können und/oder der Benutzer Änderungen des Betriebszustands der Banknotenbearbeitungsmaschine 42 vornehmen kann.

Im Einzelnen arbeitet die in Figur 2 dargestellte Banknotenbearbeitungsmaschine 42 wie folgt. Die in das Eingabefach 42a eingelegten Banknoten werden mittels der Vereinzelungseinrichtung Banknote für Banknote hintereinander dem Transportsystem 42b der Banknotenbearbeitungsmaschine 42 zugeführt. Das Transportsystem 42b transportiert die Banknoten und führt sie durch die Prüfeinrichtung 42c, die dazu ausgestaltet ist, Messdaten hinsichtlich wenigstens einer physikalischen (z.B. optischen) Eigenschaft einer durch die Prüfeinrichtung 42c hindurch geführten Banknote zu bestimmen. Die so bestimmten Messdaten der Banknote werden von einer mit der Prüfeinrichtung 42c verbundenen Steuereinrichtung 42d der Banknotenbearbeitungsmaschine 42 dazu verwendet, die Banknote durch Vergleich der Messdaten mit in der Steuereinrichtung 42d hinterlegten Klassifizierungsdaten einer bestimmten Klasse zuzuordnen und entsprechend dieser Klassifizierung einem der Ausgabefächer 42h-k zuzuführen. Bei den möglichen Klassen, aus welchen eine ausgewählt werden kann, handelt es sich beispielsweise um die Denominationen der verschiedenen Banknoten. Mögliche Klassen können dann beispielsweise für 5,10,20,50,100,200 und 500 Euro-Scheine vorgesehen sein. Im Allgemeinen kann die Ermittlung einer Klasse aber auch im Hinblick auf die Echtheit und/ oder Fitness, d. h. die Tauglichkeit der Banknote für eine Wiederverwendung, erfolgen. Die einzelnen möglichen Klassen spiegeln dann beispielsweise unterschiedliche Echtheits- bzw. Fitnessgrade der Banknoten wider, wie beispielsweise "echt", "verkehrsfähig", "zu vernichten" und dergleichen. Vorzugsweise handelt es sich bei der Prüfeinrichtung 42c um eine Einrichtung mit geeigneten Licht- und/ oder Schallquellen und optischen/akustischen Sensoren zur Messung optischer/ akustischer Eigenschaften, z.B. das Absorptions- und/ oder Reflexionsverhalten, einer Banknote in einem oder mehreren ausgewählten Wellenlängenbereichen und damit zur Erzeugung von Messdaten einer jeweiligen Banknote.

Bei der in Figur 2 dargestellten bevorzugten Ausführungsform umfasst die Steuereinrichtung 42d der Banknotenbearbeitungsmaschine 42 eine Prozessoreinheit 42e und eine Speichereinheit 42f. Bei der Steuereinrichtung 42d kann es sich gemäß einer bevorzugten Ausführungsform der Erfindung um einen Industrie-PC oder ein entsprechendes Mainboard handeln. Auf der Speichereinheit 42f der Steuereinrichtung 42d, bei der es sich z.B. um einen nichtflüchtigen Speicher in Form eines Festplatten-Speichers oder eines Flash-Speichers handeln kann, ist vorzugsweise ein herkömmliches PC-Betriebssystem, z.B. Windows oder Linux, installiert. Neben dem Betriebssystem können auf der Speichereinheit 42f der Steuereinheit 42d weitere Softwaremodule installiert sein, die bestimmte Anwendungen bereitstellen, beispielsweise zum Betrieb der Banknotenbearbeitungsmaschine 42 oder zur Verarbeitung der von der Prüfeinrichtung 42c bereitgestellten Messdaten.

In der Speichereinheit 42f der Steuereinheit 42d sind ferner Konfigurationsdaten hinterlegt, die unterschiedliche Betriebsparameter, d.h. eine bestimmte Betriebskonfiguration bzw. einen bestimmten Betriebszustand der Banknotenbearbeitungsmaschine 42 definieren. Vorzugsweise enthalten die Konfigurationsdaten die vorstehend erwähnten Klassifizierungsdaten, die die Steuereinheit 42d zusammen mit den von einer Banknote gewonnenen Messdaten zur Klassifizierung einer Banknote verwendet. Beispielsweise können die Klassifizierungsdaten einen maximalen Schwellenwert für den Verschmutzungsgrad einer Banknote definieren. Falls ein entsprechender mit dem Verschmutzungsgrad einer Banknote zusammen hängender Messwert, bei dem es sich um einen direkt gemessenen Messwert oder um einen aus anderen Messwerten abgeleiteten Messwert handeln kann und der Teil der von der Prüfeinrichtung 42c bereitgestellten Messdaten ist, den maximalen Schwellenwert für den Verschmutzungsgrad einer Banknote übersteigt, kann die Steuereinheit 42d die entsprechende Banknote als nicht mehr umlauffähig klassifizieren und einem für derartige Banknoten vorgesehenen Ausgabefach zuführen, beispielsweise einem der Ausgabefächer 42h-k.

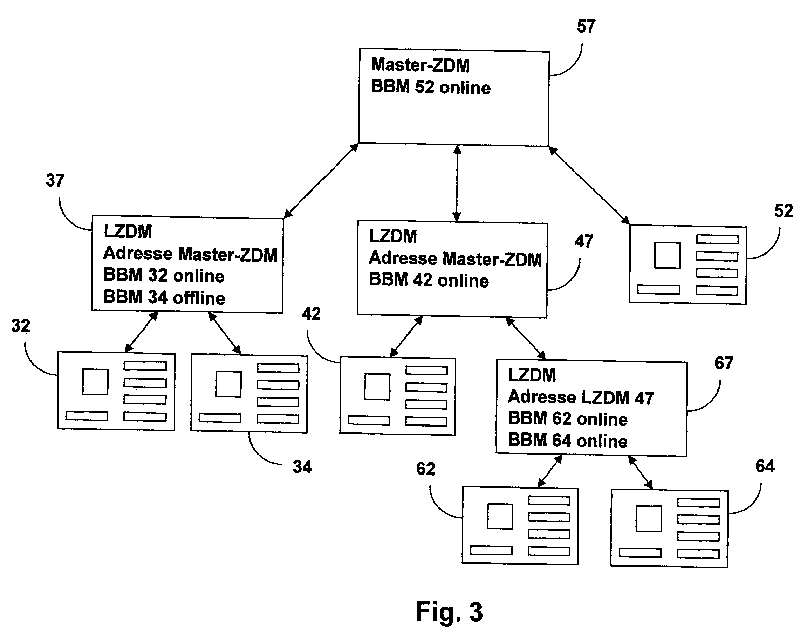

Wie sich dies der schematischen Darstellung von Figur 3 entnehmen lässt, ist erfindungsgemäß die Banknotenbearbeitungsmaschine 42 (BBM 42) logisch einem lokalen Zugangsdienstmodul 47 (LZDM 47) zugeordnet. Wie dies nachstehend im Detail beschrieben wird, ist das lokale Zugangsdienstmodul 47 insbesondere dazu ausgestaltet, Informationen über die Banknotenbearbeitungsmaschinen, die diesem lokalen Zugangsdienst zugeordnet sind (in diesem Fall die Banknotenbearbeitungsmaschine 42), zu verwalten und ferner den Fluss von Daten von und zu diesen Banknotenbearbeitungsmaschinen zu steuern.

Das lokale Zugangsdienstmodul 47 ist vorzugsweise als Software ausgestaltet, die auf dem lokalen Server 44 hinterlegt ist und ausgeführt wird. Wie im Zusammenhang mit Figur 1 bereits beschrieben, bildet der lokale Server 44, auf dem das lokale Zugangsdienstmodul 47 hinterlegt ist, zusammen mit der Banknotenbearbeitungsmaschine 42, die diesem lokalen Zugangsdienstmodul 47 logisch zugeordnet ist, Teil des lokalen Netzwerkes 40.

Anstatt auf einem lokalen Server implementiert zu sein, wie dies bei dem auf dem lokalen Server 44 implementierten lokalen Zugangsdienstmodul 47 der Fall ist, kann ein lokales Zugangsdienstmodul auch auf einer Banknotenbearbeitungsmaschine implementiert sein. Wie sich dies wiederum der Figur 3 entnehmen lässt, sind beispielsweise die Banknotenbearbeitungsmaschinen 32 und 34 logisch dem lokalen Zugangsdienstmodul 37 zugeordnet. Physikalisch könnte das lokale Zugangsdienstmodul 37 jedoch auf der Banknotenbearbeitungsmaschine 32 oder der Banknotenbearbeitungsmaschine 34 implementiert sein, die Teil des lokalen Netzwerkes 30 sind. Gemäß einer noch weiteren Alternative kann ein lokales Zugangsdienstmodul auch als eine Hardware-Komponente z.B. in Form eines Zugangsdienst-Gateways ausgestaltet sein.

Vorzugsweise sind das lokale Zugangsdienstmodul 37 und das lokale Zugangsdienstmodul 47 Teil der in Figur 3 schematisch dargestellten logischen Hierarchie von Zugangsdienstmodulen in Form einer Baumstruktur. Die Wurzel dieser logischen Hierarchie von Zugangsdienstmodulen in Form einer Baumstruktur wird durch ein zentrales Master-Zugangsdienstmodul 57 (Master-ZDM 57) gebildet, das vorzugsweise als Software auf dem zentralen Server 56 hinterlegt ist und ausgeführt wird. Wie sich dies der Figur 1 entnehmen lässt, steht das auf dem zentralen Server 56 implementierte zentrale Master-Zugangsdienstmodul 57 über das Kommunikationsnetz 20 physikalisch in Kommunikation mit dem lokalen Zugangsdienstmodul 37, das beispielsweise auf der Banknotenbearbeitungsmaschine 32 implementiert sein kann, und dem lokalen Zugangsdienstmodul 47, das auf dem lokalen Server 44 implementiert ist.

Bei der durch das zentrale Master-Zugangsdienstmodul 57, das lokale Zugangsdienstmodul 37 und das lokale Zugangsdienstmodul 47 definierten logischen Hierarchie von Zugangsdienstmodulen in Form einer Baumstruktur befinden sich das lokale Zugangsdienstmodul 37 und das lokale Zugangsdienstmodul 47 eine Ebene unter dem zentralen Master-Zugangsdienstmodul 57, d.h. eine Ebene unter der Wurzel der Baumstruktur. Auf dieser Ebene befindet sich ebenfalls die Banknotenbearbeitungsmaschine 52, die wie der zentrale Server 56 Teil des lokalen Netzwerkes 50 ist und logisch dem zentralen Master-Zugangsdienstmodul 57 zugeordnet ist.

Neben der Banknotenbearbeitungsmaschine 42 ist dem lokalen Zugangsdienstmodul 47 logisch ein weiteres lokales Zugangsdienstmodul 67 zugeordnet, das in der in Figur 3 dargestellten logischen Hierarchie von Zugangsdienstmodulen in Form einer Baumstruktur eine Ebene tiefer als das lokale Zugangsdienstmodul 47 angeordnet ist. Dem lokalen Zugangsdienstmodul 67 sind logisch die Banknotenbearbeitungsmaschinen 62 und 64 zugeordnet, die Teil des Subnetzwerkes 60 des lokalen Netzwerkes 40 sind.

Wie sich dies der Figur 3 entnehmen lässt, befindet sich an den "Blättern" der logischen Hierarchie von Zugangsdienstmodulen in Form einer Baumstruktur vorzugsweise jeweils eine Banknotenbearbeitungsmaschine, nämlich die Banknotenbearbeitungsmaschinen 32, 34, 42, 52, 62 und 64, die logisch den lokalen Zugangsdienstmodulen 37, 47 und 67 bzw. im Fall der Banknotenbearbeitungsmaschine 52 direkt dem zentralen Master-Zugangsdienstmodul 57 zugeordnet sind.

Vorzugsweise sind auf dem zentralen Server 56 und/ oder der Datenbank 58 zentral Konfigurationsdaten hinterlegt, die die Betriebskonfiguration der Banknotenbearbeitungsmaschinen definieren. Dabei ist das zentrale Master-Zugangsdienstmodul 57 aufgrund der vorstehend im Zusammenhang mit Figur 3 beschriebenen Hierarchie von Zugangsdienstmodulen in Form einer Baumstruktur vorzugsweise dazu ausgestaltet, dass eine Änderung der auf dem zentralen Server 56 und/ oder der Datenbank 58 hinterlegten Konfigurationsdaten dazu führt, dass die geänderten Konfigurationsdaten über die Hierarchie von Zugangsdienstmodulen an die sich an den "Blättern" der Baumstruktur befindenden Banknotenbearbeitungsmaschinen 32, 34, 42, 52, 62 und 64 weitergeleitet werden und diese auf der Grundlage der geänderten Konfigurationsdaten betrieben werden, d.h. die dort hinterlegten Konfigurationsdaten durch die geänderten Konfigurationsdaten ersetzt werden. Dabei erfolgt im Fall der Banknotenbearbeitungsmaschinen 32 und 34 bzw. 42 eine Weiterleitung der geänderten Konfigurationsdaten durch das lokale Zugangsdienstmodul 37 bzw. 47. Bei den Banknotenbearbeitungsmaschinen 62 und 64 erfolgt die Weiterleitung der geänderten Konfigurationsdaten über zwei Ebenen der logischen Hierarchie von lokalen Zugangsdienstmodulen, nämlich über die lokalen Zugangsdienstmodule 47 und 67. Die Banknotenbearbeitungsmaschine 52, die logisch dem zentralen Master-Zugangsdienstmodul 57 zugeordnet ist, erhält die geänderten Konfigurationsdaten direkt von dem zentralen Master-Zugangsdienstmodul 57.

Anstatt die geänderten Konfigurationsdaten an alle Banknotenbearbeitungsmaschinen 32, 34, 42, 52, 62 und 64 weiterzuleiten, kann das zentrale Master-Zugangsdienstmodul 57 dazu ausgestaltet sein, die geänderten Konfigurationsdaten nur an ausgewählte lokale Zugangsdienstmodule und/ oder ausgewählte Banknotenbearbeitungsmaschinen zu verteilen. Entsprechende Filtereinstellungen können auch an den lokalen Zugangsdienstmodulen 37, 47 und 67 vorgenommen werden. Eine weitere Option besteht darin, dass das zentrale Master-Zugangsdienstmodul 57 die geänderten Konfigurationsdaten mit Aktivierungszeitpunkten und/oder Deaktivierungszeitpunkten versieht. Dies hat zur Folge, dass die Banknotenbearbeitungsmaschinen 32, 34, 42, 52, 62 und 64 nur innerhalb des durch einen Aktivierungszeitpunkt und/oder einen Deaktivierungszeitpunkt definierten Zeitraums mit den geänderten Konfigurationsdaten betrieben werden können. Hierdurch lässt sich beispielsweise ein für alle Banknotenbearbeitungsmaschinen 32, 34, 42, 52, 62 und 64 einheitlicher Zeitpunkt definieren, ab dem geänderte Konfigurationsdaten zum Betrieb verwendet werden sollen bzw. können.

Vorzugsweise sind in den Banknotenbearbeitungsmaschinen 32, 34, 42, 52, 62 und 64 jeweils Verbindungsdaten zum Aufbau einer Verbindung mit einem jeweiligen lokalen Zugangsdienstmodul 37,47 oder 67 (bzw. im Fall der Banknotenbearbeitungsmaschine 52 mit dem zentralen Master-Zugangsdienstmodul 57) hinterlegt, dem eine Banknotenbearbeitungsmaschine 32, 34, 42, 52, 62 und 64 zugeordnet ist. Die Verbindungsdaten können z.B. die IP-Adresse und/oder die Portnummer des lokalen Zugangsdienstmoduls 37, 47 oder 67 bzw. der physischen Einheit enthalten, auf der das lokale Zugangsdienstmodul 37,47 oder 67 implementiert ist. Wie der Fachmann erkennt, erfolgt in diesem Fall die logische Zuordnung der Banknotenbearbeitungsmaschinen 32,34,42,62 und 64 zu einem der lokalen Zugangsdienstmodule 37,47 und 67 aufgrund der in den Banknotenbearbeitungsmaschinen jeweils hinterlegten Verbindungsdaten. Alternativ oder zusätzlich kann die logische Zuordnung der Banknotenbearbeitungsmaschinen 32, 34, 42, 62 und 64 zu einem der lokalen Zugangsdienstmodule 37,47 oder 67 dadurch erfolgen, dass ein lokales Zugangsdienstmodul 37, 47 und 67 jeweils selbständig nach bisher nicht logisch zugeordneten Banknotenbearbeitungsmaschinen sucht, z.B. in dem lokalen Netzwerk, in dem das lokale Zugangsdienstmodul 37, 47 oder 67 implementiert ist.

Wie dies in Figur 3 schematisch angedeutet ist, können in den lokalen Zugangsdienstmodulen vorzugsweise jeweils Verbindungsdaten (z.B. IP-Adresse und/ oder Portnummer) zum Aufbau einer Verbindung mit einem jeweiligen lokalen Zugangsdienstmodul einer höheren Ebene oder ggf. dem zentralen Master-Zugangsdienstmodul 57 hinterlegt sein, dem ein jeweiliges lokales Zugangsdienstmodul logisch zugeordnet ist. So sind bei der in Figur 3 dargestellten bevorzugten Ausführungsform in den lokalen Zugangsdienstmodulen 37 und 47 die Verbindungsdaten des zentralen Master-Zugangsdienstmoduls 57 hinterlegt und in dem lokalen Zugangsdienstmodul 67, das logisch dem lokalen Zugangsdienstmodul 47 zugeordnet ist, sind die Verbindungsdaten des lokalen Zugangsdienstmoduls 47 hinterlegt.

Vorzugsweise sind die lokalen Zugangsdienstmodule 37, 47 und 67 derart ausgestaltet, dass dann, wenn sich die Verbindungsdaten einer der Banknotenbearbeitungsmaschinen 32, 34, 42, 62 oder 64 ändern, z.B. deren IP-Adresse oder deren Portnummer, diese automatisch in dem lokalen Zugangsdienstmodul aktualisiert werden, dem diese Banknotenbearbeitungsmaschine zugeordnet ist. Vorteilhafterweise erlaubt diese bevorzugte Ausgestaltung die Verwendung von DHCP (dynamic host configuration protocol).

Die Banknotenbearbeitungsmaschinen 32, 34, 42, 52, 62 und 64 sind vorzugsweise jeweils dazu ausgestaltet, sich beim Start automatisch bei dem lokalen Zugangsdienstmodul anzumelden, dem die Banknotenbearbeitungsmaschine logisch zugeordnet ist, und sich beim Abschalten der Banknotenbearbeitungsmaschine bei diesem lokalen Zugangsdienstmodul wieder abzumelden. Dies kann beispielsweise dadurch erfolgen, dass beim Start eine Banknotenbearbeitungsmaschine ihre IP-Adresse an das lokale Zugangsdienstmodul sendet, dem diese Banknotenbearbeitungsmaschine logisch zugeordnet ist. Ferner sind gemäß einer bevorzugten Ausführungsform die Banknotenbearbeitungsmaschinen 32, 34, 42, 52, 62 und 64 jeweils dazu ausgestaltet, im Betrieb, nachdem sich eine Banknotenbearbeitungsmaschine bei dem lokalen Zugangsdienstmodul angemeldet hat, dem die Banknotenbearbeitungsmaschine logisch zugeordnet ist, ein Aktivsignal, vorzugsweise in regelmäßigen zeitlichen Abständen, an dieses lokale Zugangsdienstmodul zu senden, um diesem lokalen Zugangsdienstmodul anzuzeigen, dass die betreffende Banknotenbearbeitungsmaschine im Betrieb ist. Bei dieser bevorzugten Ausführungsform wird von den lokalen Zugangsdienstmodulen 37,47 und 67 vorzugsweise jeweils eine Liste gepflegt, in der die Banknotenbearbeitungsmaschinen, die dem lokalen Zugangsdienst logisch zugeordnet sind, aufgeführt sind, inklusive deren Verbindungsdaten, z.B. die IP-Adressen der Banknotenbearbeitungsmaschinen, sowie deren Betriebszustände, z.B. online oder offline. Vorzugsweise sind die lokalen Zugangsdienstmodule 37, 47 und 67 jeweils dazu ausgestaltet, dass dann, wenn eine der diesen lokalen Zugangsdienstmodulen 37,47 und 67 zugeordneten Banknotenbearbeitungsmaschinen 32, 34, 42, 62 und 64 nicht online ist, das betreffende lokale Zugangsdienstmodul 37,47 und 67 geänderte Konfigurationsdaten solange vorhält, bis die betreffende Banknotenbearbeitungsmaschine wieder online ist, um sodann die geänderten Konfigurationsdaten an die betreffende Banknotenbearbeitungsmaschine weiterzuleiten.

Gemäß einer bevorzugten Ausführungsform sind die lokalen Zugangsdienstmodule 37, 47 und 67 vorzugsweise dazu ausgestaltet, die Verbindungsdaten, die die lokalen Zugangsdienstmodule 37,47 und 67 von den Banknotenbearbeitungsmaschinen 32, 34; 42 und 62, 64 erhalten, an das zentrale Master-Zugangsdienstmodul 57 bzw. im Fall des lokalen Zugangsdienstmoduls 67 zunächst an das lokale Zugangsdienstmodul 47 und von dort an das zentrale Master-Zugangsdienstmodul 57 derart weiterzuleiten, dass die Verbindungsdaten entlang der Hierarchie von lokalen Zugangsdienstmodulen 37,47 und 67 nach oben zum zentralen Master-Zugangsdienstmodul 57 propagiert werden.

Gemäß einer bevorzugten Ausführungsform der Erfindung ist auf dem zentralen Server 56, auf dem das zentrale Master-Zugangsdienstmodul 57 implementiert ist, ferner eine Seriennummernverwaltungsanwendung implementiert. Von der Seriennummernverwaltungsanwendung wird vorzugsweise auf der Datenbank 58 ein Seriennummernarchiv gepflegt, in dem neu bestimmte Seriennummern von Banknoten hinterlegt und bereits eingetragene Seriennummern von Banknoten wieder aufgefunden werden können. Dabei fließen in die Seriennummernverwaltungsanwendung Seriennummern ein, die beispielsweise mittels der Steuereinrichtung einer Banknotenbearbeitungsmaschine aus den Messdaten extrahiert werden, die jeweils von der Prüfeinrichtung einer der Banknotenbearbeitungsmaschinen 32, 34, 42, 52, 62 und 64 bereitgestellt werden. Vorzugsweise erfolgt diese Extraktion der Seriennummern lokal auf den Banknotenbearbeitungsmaschinen 32, 34, 42, 52, 62 und 64.

Vorzugsweise umfassen hierzu die von der Prüfeinrichtung einer der Banknotenbearbeitungsmaschinen 32, 34, 42, 52, 62 und 64 bereitgestellten Messdaten Bilddaten einer jeweiligen Banknote, anhand denen die Seriennummer einer Banknote bestimmt werden kann. In dem Seriennummernarchiv wird die für eine Banknote bestimmte Seriennummer vorzugsweise zusammen mit weiteren die Banknote betreffenden Daten hinterlegt, wie z.B. der Banknotenwert, die Banknotenbearbeitungsmaschine, mit der diese Banknote bearbeitet worden ist, Datum und Uhrzeit der Bearbeitung und dergleichen. Mittels dieser im Seriennummernarchiv hinterlegten Seriennummerndaten ist die Seriennummernverwaltungsanwendung dazu in der Lage, den Banknotenumlauf zwischen den Banknotenbearbeitungsmaschinen 32, 34, 42, 52, 62 und 64 zu kontrollieren, die über die in Figur 3 dargestellte logische Hierarchie von Zugangsdienstmodulen mit dem auf dem zentralen Server 56 implementierten zentralen Master-Zugangsdienstmodul 57 in Verbindung stehen. Ferner ist die Seriennummernverwaltungsanwendung beispielsweise dazu in der Lage, anhand des Seriennummernarchivs Falschgeld leichter zu erkennen oder markierte Banknoten, deren Seriennummern bekannt sind, wieder aufzufinden.

Gemäß einer bevorzugten Ausführungsform der Erfindung ist auf dem zentralen Server 56, auf dem das zentrale Master-Zugangsdienstmodul 57 implementiert ist, ferner eine Wartungsanwendung implementiert, die dazu ausgestaltet ist, auf der Grundlage von Betriebsdaten der Banknotenbearbeitungsmaschinen 32, 34, 42, 52, 62 und 64, die dem zentralen Master-Zugangsdienstmodul 57 über die in Figur 3 dargestellte logische Hierarchie von Zugangsdienstmodulen zur Verfügung gestellt werden, den Wartungsbedarf einer jeweiligen Banknotenbearbeitungsmaschine 32, 34, 42, 52, 62 und 64 zu bestimmen und zu kontrollieren. Die auf dem zentralen Server 56 implementierte Wartungsanwendung kann beispielsweise den Wartungsbedarf einer jeweiligen Banknotenbearbeitungsmaschine 32, 34, 42, 52, 62 und 64 dadurch bestimmen, dass die Betriebsdaten (z.B. der Banknotendurchsatz) einer der Banknotenbearbeitungsmaschinen 32, 34, 42, 52, 62 und 64 mit den Betriebsdaten der anderen Banknotenbearbeitungsmaschinen 32, 34, 42, 52, 62 und 64 verglichen werden. Wird bei diesem Vergleich ein Leistungsabfall der einen Banknotenbearbeitungsmaschine festgestellt, kann die auf dem zentralen Server 56 ausgeführte Wartungsanwendung eine Wartung dieser Banknotenbearbeitungsmaschine veranlassen. Alternativ oder zusätzlich kann die auf dem zentralen Server 56 bereitgestellte Wartungsanwendung auf der Grundlage der von den Banknotenbearbeitungsmaschinen 32, 34, 42, 52, 62 und 64 bereitgestellten Betriebsdaten die Wartung einer der Banknotenbearbeitungsmaschinen 32, 34, 42, 52, 62 und 64 dann veranlassen, wenn beispielsweise die Betriebsdaten dieser Banknotenbearbeitungsmaschine anzeigen, dass diese eine Anzahl von Banknoten bearbeitet hat, die größer als ein definierbarer Schwellenwert ist. Die von einer Banknotenbearbeitungsmaschine bereitgestellten Betriebsdaten können zusätzlich beispielsweise Informationen über die in einer Banknotenbearbeitungsmaschine aufgetretenen Fehlerfälle enthalten, wie z.B. die Fehlfunktion einer Komponente einer Banknotenbearbeitungsmaschine, die Ausbildung eines Banknotenstaus an einer bestimmten Stelle der Banknotenbearbeitungsmaschine und dergleichen. Vorzugsweise ist die auf dem zentralen Server 56 implementierte Wartungsanwendung dazu ausgestaltet, aufgrund der Informationen über Fehlerfälle, die bei Banknotenbearbeitungsmaschinen beispielsweise im Durchschnitt nach der Bearbeitung einer bestimmten Zahl von Banknoten auftreten, die Wartung einer Banknotenbearbeitungsmaschine dieses Typs zu veranlassen, bei der dieser Fehlerfall bisher nicht aufgetreten ist.

Vorzugsweise enthalten die Konfigurationsdaten, die in dem zentralen Master-Zugangsdienstmodul und den Banknotenbearbeitungsmaschinen hinterlegt sind, ferner Sicherheitseinstellungsdaten, die die Sicherheitseinstellungen einer jeweiligen Banknotenbearbeitungsmaschine betreffen, wie beispielsweise die minimale Länge von Benutzerpasswörtern, die Länge der Passwort-Historie oder die Anzahl von Login-Fehlversuchen bis ein Benutzerkonto gesperrt wird. Gemäß einer bevorzugten Ausführungsform enthalten die Sicherheitseinstellungsdaten lokale Sicherheitseinstellungsdaten und globale Sicherheitseinstellungsdaten. Dabei sind das zentrale Master-Zugangsdienstmodul und die lokalen Zugangsdienstmodule derart ausgestaltet, dass die lokalen Sicherheitseinstellungsdaten nur an die Banknotenbearbeitungsmaschinen verteilt werden, die bestimmten lokalen Zugangsdienstmodulen logisch zugeordnet sind, für die diese lokalen Sicherheitseinstellungen gelten sollen, und die globalen Sicherheitseinstellungen an alle Bearbeitungsmaschinen verteilt werden.

Erfindungsgemäß ist eine derartige Unterscheidung zwischen lokalen und globalen Daten auch für die hier beschriebenen anderen Arten von Daten, z.B. die Konfigurationsdaten, denkbar.

## Patentansprüche

1. System (10) zur Bearbeitung von Wertdokumenten, insbesondere Banknoten, wobei das System (10) umfasst:
eine Vielzahl von Banknotenbearbeitungsmaschinen (32, 34, 42, 52, 62, 64), die über ein Kommunikationsnetz (20) kommunizieren können und in denen jeweils Konfigurationsdaten hinterlegt sind, die die Betriebskonfiguration einer jeweiligen Banknotenbearbeitungsmaschine definieren, wobei wenigstens eine erste Banknotenbearbeitungsmaschine (32, 34, 42, 52, 62, 64) logisch einem ersten lokalen Zugangsdienstmodul (37, 47, 67) zugeordnet ist und wenigstens eine zweite Banknotenbearbeitungsmaschine (32, 34, 42, 52, 62, 64) logisch einem zweiten lokalen Zugangsdienstmodul (37, 47, 67) zugeordnet ist, und das erste und/ oder zweite lokale Zugangsdienstmodul (37, 47, 67) ausgebildet ist, Informationen über die erste und/ oder die zweite Banknotenbearbeitungsmaschine (32, 34, 42, 52, 62, 64) zu verwalten und den Fluss von Daten von und zu dieser ersten und/ oder zweiten Banknotenbearbeitungsmaschine (32, 34, 42, 52, 62, 64) zu steuern; und
ein zentrales Master-Zugangsdienstmodul (57), in dem Konfigurationsdaten hinterlegt sind und das über das Kommunikationsnetz (20) in Kommunikation mit dem ersten lokalen Zugangsdienstmodul (37, 47, 67) und dem zweiten lokalen Zugangsdienstmodul (37, 47, 67) steht;
wobei das zentrale Master-Zugangsdienstmodul (57), das erste lokale Zugangsdienstmodul (37, 47, 67) und das zweite lokale Zugangsdienstmodul (37,47, 67) eine logische Hierarchie von Zugangsdienstmodulen in Form einer Baumstruktur ausbilden, bei der das zentrale Master-Zugangsdienstmodul (57) die Wurzel der Baumstruktur bildet und derart ausgestaltet ist, dass eine Änderung der im zentralen Master-Zugangsdienstmodul (57) hinterlegten Konfigurationsdaten dazu führt, dass die geänderten Konfigurationsdaten über die Hierarchie von Zugangsdienstmodulen automatisch an die erste und die zweite Banknotenbearbeitungsmaschine (32, 34, 42, 52, 62, 64) übertragen werden und dort zu einer Änderung der Konfigurationsdaten der ersten und der zweiten Banknotenbearbeitungsmaschine (32, 34, 42, 52, 62, 64) führen.

2. System (10) nach Anspruch 1, wobei die lokalen Zugangsdienstmodule (37, 47, 67) als Software ausgestaltet sind, die auf einem jeweiligen lokalen Server (44) hinterlegt ist und ausgeführt wird und/ oder auf einer der Vielzahl von Banknotenbearbeitungsmaschinen (32, 34, 42, 52, 62, 64) hinterlegt ist und ausgeführt wird, und/oder als Hardware in Form eines Zugangsdienst-Gateways ausgestaltet sind.

3. System (10) nach einem der vorhergehenden Ansprüche, wobei das zentrale Master-Zugangsdienstmodul (57) als Software auf einem zentralen Server (56) hinterlegt ist und dort ausgeführt wird oder auf einer der Vielzahl von Banknotenbearbeitungsmaschinen (32, 34, 42, 52, 62, 64) implementiert ist.

4. System (10) nach einem der vorhergehenden Ansprüche, wobei an den jeweiligen Blättern der logischen Hierarchie von Zugangsdienstmodulen in Form einer Baumstruktur jeweils eine Banknotenbearbeitungsmaschine (32, 34, 42, 52, 62, 64) angeordnet ist, die logisch einem lokalen Zugangsdienstmodul (37, 47, 67) einer höheren Ebene der Baumstruktur oder dem Master-Zugangsdienstmodul (57) zugeordnet sind.

5. System (10) nach einem der vorhergehenden Ansprüche, wobei das zentrale Master-Zugangsdienstmodul (57) dazu ausgestaltet ist, die geänderten Konfigurationsdaten nur an ausgewählte lokale Zugangsdienstmodule (37, 47, 67) und/ oder ausgewählte Banknotenbearbeitungsmaschinen (32, 34, 42, 52, 62, 64) zu verteilen, und/oder das zentrale Master-Zugangsdienstmodul (57) dazu ausgestaltet ist, die geänderten Konfigurationsdaten derart mit Aktivierungszeitpunkten und/ oder Deaktivierungszeitpunkten zu versehen, dass eine Banknotenbearbeitungsmaschine (32, 34, 42, 52, 62, 64) nur innerhalb eines durch einen Aktivierungszeitpunkt und/ oder einen Deaktivierungszeitpunkt definierten Gültigkeitzeitraums mit den geänderten Konfigurationsdaten betrieben werden kann.

6. System (10) nach einem der vorhergehenden Ansprüche, wobei Verbindungsdaten zum Aufbau einer Verbindung mit dem lokalen Zugangsdienstmodul (37, 47, 57), dem eine Banknotenbearbeitungsmaschine (32, 34, 42, 52, 62, 64) zugeordnet ist, in den Banknotenbearbeitungsmaschinen (32, 34, 42, 52, 62, 64) hinterlegt sind oder die Banknotenbearbeitungsmaschinen (32, 34, 42, 52, 62, 64) dazu ausgestaltet sind, ein lokales Zugangsdienstmodul (37, 47, 57) selbständig zu suchen.

7. System (10) nach einem der vorhergehenden Ansprüche, wobei die Konfigurationsdaten, die in dem zentralen Master-Zugangsdienstmodul (57) und den Banknotenbearbeitungsmaschinen (32, 34, 42, 52, 62, 64) hinterlegt sind, ferner Sicherheitseinstellungsdaten enthalten, wobei die Sicherheitseinstellungsdaten lokale Sicherheitseinstellungsdaten, die nur an die Banknotenbearbeitungsmaschinen (32, 34, 42, 52, 62, 64) verteilt werden, die bestimmten lokalen Zugangsdienstmodulen (37, 47, 67) logisch zugeordnet sind, für die diese lokalen Sicherheitseinstellungen gelten sollen, und globale Sicherheitseinstellungsdaten enthalten, die an alle Banknotenbearbeitungsmaschinen (32, 34, 42, 52, 62, 64) verteilt werden.

8. System (10) nach einem der vorhergehenden Ansprüche, wobei das zentrale Master-Zugangsdienstmodul (57) mit einer Seriennummernverwaltungsanwendung interagiert, die dazu ausgestaltet ist, ein zentrales Seriennummernarchiv zu pflegen, wobei in die Seriennummernverwaltungsanwendung Seriennummern einfließen, die aus den Messdaten extrahiert werden, die jeweils von der Prüfeinrichtung (42c) einer der Banknotenbearbeitungsmaschinen (42) bereitgestellt werden, und wobei diese Extraktion der Seriennummern lokal auf den Banknotenbearbeitungsmaschinen erfolgt.

9. System (10) nach einem der vorhergehenden Ansprüche, wobei das zentrale Master-Zugangsdienstmodul (57) mit einer Wartungsanwendung interagiert, die dazu ausgestaltet ist, auf der Grundlage von Betriebsdaten der Banknotenbearbeitungsmaschinen (32, 34, 42, 52, 62, 64), die dem zentralen Master-Zugangsdienstmodul (57) über die logische Hierarchie von Zugangsdienstmodulen zur Verfügung gestellt werden, den Wartungsbedarf einer jeweiligen Banknotenbearbeitungsmaschine (32, 34, 42, 52, 62, 64) zu bestimmen und ggf. die Wartung einer Banknotenbearbeitungsmaschine (32, 34, 42, 52, 62, 64) zu veranlassen.

10. Verfahren zum Bearbeiten von Wertdokumenten, insbesondere Banknoten, mittels einer Vielzahl von Banknotenbearbeitungsmaschinen (32, 34, 42, 52, 62, 64), wobei das Verfahren die folgenden Schritte umfasst:
das logische Zuordnen einer ersten Banknotenbearbeitungsmaschine (32, 34, 42, 52, 62, 64) zu einem ersten lokalen Zugangsdienstmodul (37, 47, 67) und einer zweiten Banknotenbearbeitungsmaschine (32, 34, 42, 52, 62, 64) zu einem zweiten lokalen Zugangsdienstmodul (37, 47, 67), wobei die Banknotenbearbeitungsmaschinen (32, 34, 42, 52, 62, 64) über ein Kommunikationsnetz (20) miteinander kommunizieren können und in den Banknotenbearbeitungsmaschinen (32, 34, 42, 52, 62, 64) jeweils Konfigurationsdaten hinterlegt sind, die die Betriebskonfiguration einer jeweiligen Banknotenbearbeitungsmaschine (32, 34, 42, 52, 62, 64) definieren;
das Bereitstellen eines zentralen Master-Zugangsdienstmoduls (57), in dem ebenfalls Konfigurationsdaten hinterlegt sind und das über das Kommunikationsnetz in Kommunikation mit dem ersten lokalen Zugangsdienstmodul (37,47,67) und dem zweiten lokalen Zugangsdienstmodul (37, 47, 67) steht, wobei das zentrale Master-Zugangsdienstmodul (57), das erste lokale Zugangsdienstmodul (37, 47, 67) und das zweite lokale Zugangsdienstmodul (37, 47, 67) eine logische Hierarchie von Zugangsdienstmodulen in Form einer Baumstruktur ausbilden, bei der das zentrale Master-Zugangsdienstmodul (57) die Wurzel der Baumstruktur bildet und derart ausgestaltet ist, dass eine Änderung der im zentralen Master-Zugangsdienst-modul (57) hinterlegten Konfigurationsdaten dazu führt, dass die geänderten Konfigurationsdaten über die Hierarchie von Zugangsdienstmodulen automatisch an die erste Banknotenbearbeitungsmaschine (32, 34, 42, 52, 62, 64) und die zweite Banknotenbearbeitungsmaschine (32, 34, 42, 52, 62, 64) übertragen werden und dort zu einer Änderung der Konfigurationsdaten und somit der Konfiguration der ersten Banknotenbearbeitungsmaschine (32, 34, 42, 52, 62, 64) und der zweiten Banknotenbearbeitungsmaschine (32, 34, 42, 52, 62, 64) führen; und
das erste und/ oder zweite lokale Zugangsdienstmodul (37, 47, 67) Informationen über die erste und/ oder die zweite Banknotenbearbeitungsmaschine (32, 34, 42, 52, 62, 64) verwaltet und den Fluss von Daten von und zu dieser ersten und/ oder zweiten Banknotenbearbeitungsmaschine (32, 34, 42, 52, 62, 64) steuert.

## Claims

1. A system (10) for processing value documents, in particular bank notes, wherein the system (10) comprises:
a multiplicity of bank-note processing machines (32, 34, 42, 52, 62, 64) which can communicate via a communication network (20) and which respectively have stored therein configuration data which define the operating configuration of a respective bank-note processing machine, wherein at least a first bank-note processing machine (32, 34, 42, 52, 62, 64) is logically associated with a first local access service module (37, 47, 67), and at least a second bank-note processing machine (32, 34, 42, 52, 62, 64) is logically associated with a second local access service module (37, 47, 67); and the first and/or second local access service module (37, 47, 67) is adapted for managing information about the first and/or the second bank-note processing machine (32, 34, 42, 52, 62, 64) and for controlling the flow of data from and to said first and/or second bank-note processing machine (32, 34, 42, 52, 62, 64); and
a central master access service module (57) which has configuration data stored therein and which is in communication via the communication network (20) with the first local access service module (37, 47, 67) and the second local access service module (37, 47, 67);
wherein the central master access service module (57), the first local access service module (37, 47, 67) and the second local access service module (37, 47, 67) form a logical hierarchy of access service modules in the form of a tree structure, in which the central master access service module (57) constitutes the root of the tree structure and is adapted such that a change of the configuration data stored in the central master access service module (57) leads to the changed configuration data being automatically transferred via the hierarchy of access service modules to the first and the second bank-note processing machine (32, 34, 42, 52, 62, 64), and leading there to a change of the configuration data of the first and the second bank-note processing machine (32, 34, 42, 52, 62, 64).

2. The system (10) according to claim 1, wherein the local access service modules (37, 47, 67) are adapted as software which is stored and executed on a respective local server (44) and/or is stored and executed on one of the multiplicity of bank-note processing machines (32, 34, 42, 52, 62, 64), and/or are adapted as hardware in the form of an access service gateway.

3. The system (10) according to either of the above claims, wherein the central master access service module (57) is stored as software on a central server (56) and executed there, or is implemented on one of the multiplicity of bank-note processing machines (32, 34, 42, 52, 62, 64).

4. The system (10) according to any of the above claims, wherein there is respectively disposed on the respective leaves of the logical hierarchy of access service modules in the form of a tree structure a bank-note processing machine (32, 34, 42, 52, 62, 64) which is logically associated with a local access service module (37, 47, 67) of a higher level of the tree structure or with the master access service module (57).

5. The system (10) according to any of the above claims, wherein the central master access service module (57) is adapted for distributing the changed configuration data only to selected local access service modules (37, 47, 67) and/or selected bank-note processing machines (32, 34, 42, 52, 62, 64), and/or the central master access service module (57) is adapted for providing the changed configuration data with activation times and/or deactivation times such that a bank-note processing machine (32, 34, 42, 52, 62, 64) can be operated with the changed configuration data only within a period of validity defined by an activation time and/or a deactivation time.

6. The system (10) according to any of the above claims, wherein connection data for setting up a connection with the local access service module (37, 47, 57) with which a bank-note processing machine (32, 34, 42, 52, 62, 64) is associated are stored in the bank-note processing machines (32, 34, 42, 52, 62, 64), or the bank-note processing machines (32, 34, 42, 52, 62, 64) are adapted for searching independently for a local access service module (37, 47, 57).

7. The system (10) according to any of the above claims, wherein the configuration data that are stored in the central master access service module (57) and the bank-note processing machines (32, 34, 42, 52, 62, 64) further contain security setting data, wherein the security setting data contain local security setting data which are distributed only to those bank-note processing machines (32, 34, 42, 52, 62, 64) that are logically associated with certain local access service modules (37, 47, 67) for which these local security settings are to hold, and global security setting data which are distributed to all bank-note processing machines (32, 34, 42, 52, 62, 64).

8. The system (10) according to any of the above claims, wherein the central master access service module (57) interacts with a serial-number management application which is adapted for maintaining a central serial-number archive, wherein the serial-number management application incorporates serial numbers that are extracted from the measuring data which are provided respectively by the checking device (42c) of one of the bank-note processing machines (42), and wherein this extraction of the serial numbers is effected locally on the bank-note processing machines.

9. The system (10) according to any of the above claims, wherein the central master access service module (57) interacts with a servicing application which is adapted for determining the need for servicing of a respective bank-note processing machine (32, 34, 42, 52, 62, 64) on the basis of operating data of the bank-note processing machines (32, 34, 42, 52, 62, 64) which are made available to the central master access service module (57) via the logical hierarchy of access service modules, and for prompting the servicing of a bank-note processing machine (32, 34, 42, 52, 62, 64), where applicable.

10. A method for processing value documents, in particular bank notes, by means of a multiplicity of bank-note processing machines (32, 34, 42, 52, 62, 64), wherein the method comprises the following steps:
logically associating a first bank-note processing machine (32, 34, 42, 52, 62, 64) with a first local access service module (37, 47, 67), and a second bank-note processing machine (32, 34, 42, 52, 62, 64) with a second local access service module (37, 47, 67), wherein the bank-note processing machines (32, 34, 42, 52, 62, 64) can communicate with each other via a communication network (20), and the bank-note processing machines (32, 34, 42, 52, 62, 64) respectively have stored therein configuration data which define the operating configuration of a respective bank-note processing machine (32, 34, 42, 52, 62, 64);
providing a central master access service module (57) which likewise has configuration data stored therein and which is in communication via the communication network with the first local access service module (37, 47, 67) and the second local access service module (37, 47, 67), wherein the central master access service module (57), the first local access service module (37, 47, 67) and the second local access service module (37, 47, 67) form a logical hierarchy of access service modules in the form of a tree structure, in which the central master access service module (57) constitutes the root of the tree structure and is adapted such that a change of the configuration data stored in the central master access service module (57) leads to the changed configuration data being automatically transferred via the hierarchy of access service modules to the first bank-note processing machine (32, 34, 42, 52, 62, 64) and the second bank-note processing machine (32, 34, 42, 52, 62, 64), and leading there to a change of the configuration data and thus of the configuration of the first bank-note processing machine (32, 34, 42, 52, 62, 64) and of the second bank-note processing machine (32, 34, 42, 52, 62, 64); and
the first and/or second local access service module (37, 47, 67) manages information about the first and/or the second bank-note processing machine (32, 34, 42, 52, 62, 64) and controls the flow of data from and to said first and/or second banknote processing machine (32, 34, 42, 52, 62, 64).

## Revendications

1. Système (10) de traitement de documents de valeur, en particulier de billets de banque, le système (10) comprenant :
une pluralité de machines de traitement de billets de banque (32, 34, 42, 52, 62, 64) qui peuvent communiquer par l'intermédiaire d'un réseau de communication (20) et dans lesquelles sont respectivement stockées des données de configuration qui définissent la configuration d'exploitation d'une machine de traitement de billets de banque respective, cependant qu'au moins une première machine de traitement de billets de banque (32, 34, 42, 52, 62, 64) est affectée logiquement à un premier module de service d'accès (37, 47, 67) local et qu'au moins une deuxième machine de traitement de billets de banque (32, 34, 42, 52, 62, 64) est affectée logiquement à un deuxième module de service d'accès (37, 47, 67) local, et que le premier et/ou deuxième module de service d'accès (37, 47, 67) local est conçu pour gérer des informations sur la première et/ou de la deuxième machine de traitement de billets de banque (32, 34, 42, 52, 62, 64) et pour commander le flux de données depuis ou vers cette première et/ou deuxième machine de traitement de billets de banque (32, 34, 42, 52, 62, 64) ; et
un module de service d'accès maître (57) central dans lequel sont stockées des données de configuration et qui, par l'intermédiaire du réseau de communication (20), est en communication avec le premier module de service d'accès (37, 47, 67) local et avec le deuxième module de service d'accès (37, 47, 67) local;
cependant que le module de service d'accès maître (57) central, le premier module de service d'accès (37, 47, 67) local et le deuxième module de service d'accès (37, 47, 67) local forment une hiérarchie logique de modules de service d'accès sous forme d'une structure arborescente dans laquelle le module de service d'accès maître (57) central constitue la racine de la structure arborescente et est réalisé de telle sorte qu'une modification des données de configuration stockées dans le module de service d'accès maître (57) central mène à ce que les données de configuration modifiées sont, par le biais de la hiérarchie de modules de service d'accès, automatiquement transmises à la première et à la deuxième machine de traitement de billets de banque (32, 34, 42, 52, 62, 64) et y entraînent une modification des données de configuration de la première et de la deuxième machine de traitement de billets de banque (32, 34, 42, 52, 62, 64).

2. Système (10) selon la revendication 1, cependant que les modules de service d'accès locaux (37, 47, 67) son réalisés en tant que logiciel qui est stocké sur un serveur local respectif (44) et est exécuté et/ou est stocké sur une de la pluralité de machines de traitement de billets de banque (32, 34, 42, 52, 62, 64) et est exécuté, et/ou sont réalisés en tant que matériel sous forme d'une passerelle de service d'accès.

3. Système (10) selon une des revendications précédentes, cependant que le module de service d'accès maître (57) central est stocké en tant que logiciel sur un serveur central (56) et y est exécuté ou est implémenté sur une de la pluralité de machines de traitement de billets de banque (32, 34, 42, 52, 62, 64).

4. Système (10) selon une des revendications précédentes, cependant que, aux pages respectives de la hiérarchie logique de modules de service d'accès sous forme d'une structure arborescente, respectivement une machine de traitement de billets de banque (32, 34, 42, 52, 62, 64) est agencée, qui sont agencées logiquement à un module de service d'accès (37, 47, 67) local d'un niveau plus élevé de la structure arborescente ou au module de service d'accès maître (57).

5. Système (10) selon une des revendications précédentes, cependant que le module de service d'accès maître (57) central est réalisé pour ne diffuser les données de configuration modifiées qu'à des modules de service d'accès locaux (37, 47, 67) choisis et/ou à des machines de traitement de billets de banque (32, 34, 42, 52, 62, 64) choisies, et/ou que le module de service d'accès maître (57) central est réalisé pour pouvoir de telle sorte les données de configuration modifiées d'échéances d'activation et/ou d'échéances de désactivation qu'une machine de traitement de billets de banque (32, 34, 42, 52, 62, 64) ne peut être exploitée avec les données de configuration modifiées que dans un délai de validité défini par une échéance d'activation et/ou une échéance de désactivation.

6. Système (10) selon une des revendications précédentes, cependant que des données de connexion destinées à l'établissement d'une connexion avec le module de service d'accès local (37, 47, 67) auquel est affectée une machine de traitement de billets de banque (32, 34, 42, 52, 62, 64) sont stockées dans les machines de traitement de billets de banque (32, 34, 42, 52, 62, 64), ou les machines de traitement de billets de banque (32, 34, 42, 52, 62, 64) sont réalisées pour chercher de manière autonome un module de service d'accès local (37, 47, 67).

7. Système (10) selon une des revendications précédentes, cependant que les données de configuration qui sont stockées dans le module de service d'accès maître (57) central et dans les machines de traitement de billets de banque (32, 34, 42, 52, 62, 64) contiennent en outre des données de réglage de sécurité, cependant que les données de réglage de sécurité contiennent des données de réglage de sécurité locales qui ne sont diffusées qu'aux machines de traitement de billets de banque (32, 34, 42, 52, 62, 64) affectées logiquement à certains modules de service d'accès locaux (37, 47, 67) auxquels doivent s'appliquer ces configurations de sécurité locales, et des données de réglage de sécurité globales qui sont diffusées à toutes les machines de traitement de billets de banque (32, 34, 42, 52, 62, 64).

8. Système (10) selon une des revendications précédentes, cependant que le module de service d'accès maître (57) central interagit avec une application de gestion de numéros de série qui est réalisée pour entretenir des archives centrales de numéros de série, cependant que, dans l'application de gestion de numéros de série, des numéros de série extraits des données de mesure mises respectivement à disposition par le dispositif de vérification (42c) d'une des machines de traitement de billets de banque (42) entrent en compte, et cependant que cette extraction des numéros de série a lieu localement sur les machines de traitement de billets de banque.

9. Système (10) selon une des revendications précédentes, cependant que le module de service d'accès maître (57) central interagit avec une application d'entretien qui est réalisée pour, sur la base de données d'exploitation des machines de traitement de billets de banque (32, 34, 42, 52, 62, 64) mises à disposition du module de service d'accès maître (57) central par le biais de la hiérarchie logique de modules de service d'accès, déterminer le besoin d'entretien d'une machine de traitement de billets de banque (32, 34, 42, 52, 62, 64) respective et déclencher éventuellement l'entretien d'une machine de traitement de billets de banque (32, 34, 42, 52, 62, 64).

10. Procédé de traitement de documents de valeur, en particulier de billets de banque, au moyen d'une pluralité de machines de traitement de billets de banque (32, 34, 42, 52, 62, 64), le procédé comprenant les étapes suivantes:
l'affectation logique d'une première machine de traitement de billets de banque (32, 34, 42, 52, 62, 64) à un premier module de service d'accès (37, 47, 67) local et d'une deuxième machine de traitement de billets de banque (32, 34, 42, 52, 62, 64) à un deuxième module de service d'accès (37, 47, 67) local, les machines de traitement de billets de banque (32, 34, 42, 52, 62, 64) pouvant communiquer entre elles par l'intermédiaire d'un réseau de communication (20), et, dans les machines de traitement de billets de banque (32, 34, 42, 52, 62, 64), des données de configuration définissant la configuration d'exploitation d'une machine de traitement de billets de banque respective (32, 34, 42, 52, 62, 64) étant respectivement stockées;
la mise à disposition d'un module de service d'accès maître (57) central dans lequel sont également stockées des données de configuration et qui, par l'intermédiaire du réseau de communication (20), est en communication avec le premier module de service d'accès (37, 47, 67) local et le deuxième module de service d'accès (37, 47, 67) local, cependant que le module de service d'accès maître (57) central, le premier module de service d'accès (37, 47, 67) local et le deuxième module de service d'accès (37, 47, 67) local forment une hiérarchie logique de modules de service d'accès sous forme d'une structure arborescente dans laquelle le module de service d'accès maître (57) central constitue la racine de la structure arborescente et est réalisé de telle sorte qu'une modification des données de configuration stockées dans le module de service d'accès maître (57) central mène à ce que les données de configuration modifiées sont, par le biais de la hiérarchie de modules de service d'accès, automatiquement transmises à la première machine de traitement de billets de banque (32, 34, 42, 52, 62, 64) et à la deuxième machine de traitement de billets de banque (32, 34, 42, 52, 62, 64) et y entraînent une modification des données de configuration et par conséquent de la configuration de la première machine de traitement de billets de banque (32, 34, 42, 52, 62, 64) et de la deuxième machine de traitement de billets de banque (32, 34, 42, 52, 62, 64) ; et
le premier et/ou deuxième module de service d'accès (37, 47, 67) local gère des informations sur la première et/ou de la deuxième machine de traitement de billets de banque (32, 34, 42, 52, 62, 64) et commande le flux de données depuis ou vers cette première et/ou deuxième machine de traitement de billets de banque (32, 34, 42, 52, 62, 64).
